# EUROPÄISCHE PATENTSCHRIFT

(11) **EP 1 348 911 B1**
(45) Veröffentlichungstag und Bekanntmachung des Hinweises auf die Patenterteilung: **04.01.2006**
(21) Anmeldenummer: 03006032.1
(22) Anmeldetag: 19.03.2003
(51) Int. Cl.: F24F 3/153, B63J 2/04

(54) **Luftaufbereitungsgerät zur Regulierung der Wärme und der Luftfeuchtigkeit in geschlossenen Räumen**
Air-conditioning device for the heat and humidity control of closed rooms
Dispositif de climatisation d'air pour la commande du chauffage et de l'humidification dans une enceinte fermée

(30) Priorität: 26.03.2002 DE 20204746 U
(43) Veröffentlichungstag der Anmeldung: 01.10.2003
(73) Patentinhaber: Kreutzfeldt, Nils, 23966 Wismar (DE)
(72) Erfinder: Kreutzfeldt, Nils, 23966 Wismar (DE)

(56) Entgegenhaltungen:
- EP-A- 0 492 810
- DE-A- 10 042 830
- FR-A- 2 742 216
- PATENT ABSTRACTS OF JAPAN vol. 2002, no. 07, 3. Juli 2002 (2002-07-03) -& JP 2002 081688 A (MATSUSHITA ELECTRIC IND CO LTD), 22. März 2002 (2002-03-22)

## Beschreibung

Die Erfindung bezieht sich auf ein Luftaufbereitungsgerät zur Regulierung der Wärme und der Luftfeuchtigkeit in geschlossenen Räumen nach dem Oberbegriff des Anspruchs 1.
Derartige Luftaufbereitungsgeräte werden zur Verbesserung des Raumklimas beispielsweise in Motor- und Segelyachten eingesetzt.

Das Raumklima in Motor- und Segelyachten ist einerseits durch die permanente Wassernähe und andererseits durch das geringe Raumvolumen beeinflusst. Besonders bei hoher Luftfeuchtigkeit kommt es an Stellen mit niedriger Temperatur durch die Unterschreitung des Taupunktes zur Bildung von Kondenswasser. Hohe Luftfeuchtigkeit verbunden mit niedrigen Temperaturen lassen schnell ein für Personen unbehagliches Raumklima entstehen. Ein solches Raumklima ist zudem auch für die Innenausstattung der Motor- oder Segelyacht und besonders für deren elektronische Ausrüstungsgegenstände abträglich.

Die notwendige Be- und Entlüftung der inneren Räumlichkeiten erfolgt nach subjektivem Ermessen herkömmlich über das Öffnen von Fenstern und Türen. Besonders bei Schlechtwetterlagen schließt sich diese Möglichkeit aus und eine gezielte Luftumwälzung und eine wirksame Minderung der Luftfeuchtigkeit in den Räumlichkeiten ist dadurch nicht möglich.
Der Erhöhung der Raumtemperatur mittels einer Heizung und der damit verbundenen Absenkung der relativen Luftfeuchtigkeit sind durch die üblicherweise geringen Energiereserven auf Motor- und Segelyachten enge Grenzen gesetzt. Es sind Primärbrenner-Heizungen bekannt, die mit Diesel, Benzin, Paraffin oder Gas betrieben werden. Auch sind betriebsbedingte Geräusch- und Geruchsbelästigungen unvermeidbar und sehr nachteilig besonders bei nächtlichem Betrieb in Hafenanlagen.

Aus der Gebäudewirtschaft sind Luft-Luft Wärmetauschvorrichtungen als Belüftungsanlagen bekannt. Dabei werden der kalte Frischluftstrom und der warme Rückluftstrom gegenläufig über Wärmeaustauscherelemente geführt. Bei hohen Temperaturunterschieden zwischen dem kalten Frischluftstrom und dem warmen Abluftstrom sowie einer entsprechenden Bauart und Größe des Wärmeaustauschelementes lässt sich eine Wärmerückgewinnung von 60..80 % erreichen. Um den Effekt der Wärmerückgewinnung zu verstärken, können solche Belüftungsanlagen mit einer Wärmepumpenanlage kombiniert sein.

Mit der OS DE 199 25 823 ist eine Vorrichtung zur Wärmerückgewinnung bei der Belüftung und Heizung von Wohn- und Nutzräumen bekannt geworden, bei der unter Verwendung der Kombination eines Kreuzstrom-Plattenwärmeaustauschers mit einer Wärmepumpenanlage die in einem Abluft-Fortluft-Strom enthaltene Wärme auf einen Frischluft-Zuluft-Strom übertragbar ist. Dabei ist der Kondensator der Wärmepumpenanlage im Frischluft-Zuluft-Strom stromab nach dem Kreuzstrom-Plattenwärmeaustauscher, der Verdampfer der Wärmepumpenanlage im Abluft-Fortluft-Strom stromab vor dem Kreuzstrom-Plattenwärmeaustauscher und der Verdichters der Wärmepumpenanlage im Frischluft-Zuluft-Strom stromab nach dem Kreuzstrom-Plattenwärmeaustauscher und nach dem Kondensator der Wärmepumpenanlage angeordnet.

Der Luftaustausch erfolgt im Gegenstromprinzip. Einerseits überstreicht Abluft zunächst den Verdampfer der Wärmepumpenanlage. Dabei wird ein Teil der Wärmeenergie der Abluft auf im Verdampfer befindliche Kältemittel übertragen. Ein weiterer Teil der Wärmeenergie der Abluft wird im Kreuzstrom-Plattenwärmeaustauscher abgegeben, so dass die abgekühlte Abluft als Fortluft aus der Belüftungsvorrichtung hinaus in die Umgebung gelangt.

Andererseits überstreicht kühle Frischluft, die von außen aus der Umgebung angesaugt wird, den Kreuzstrom-Plattenwärmeaustauscher und nimmt die zuvor von der Abluft abgegebene Wärmeenergie auf. Danach wird die bereits vorgewärmte Frischluft über den Kondensator der Wärmepumpenanlage geführt. Dabei wird die Wärmeenergie des verdichteten, im Kondensator befindlichen Kältemittels auf die Frischluft übertragen. Die Frischluft wird stromab durch die Abwärme des Verdichters weiter erwärmt und als Zuluft entsprechend in Richtung der zu lüftenden Räumlichkeiten abgeführt.
Es ist vorgesehen, dass die Vorrichtung zwischen Frischluft- und Umluftbetrieb umschaltbar ist. Dabei erfolgt der Wärmeaustausch im Frischluftbetrieb zwischen kalter Frischluft und warmer Abluft. Im Umluftbetrieb wird warme Abluft umgewälzt, die sich dabei weiter erwärmt. Der Umluftbetrieb ist notwendig, um bei Außentemperaturen um den Gefrierpunkt, das Vereisen des Kreuzstrom-Plattenwärmeaustauschers zu vermeiden.
Nachteilig bei dieser Vorrichtung ist die Größe und das Gewicht, die sich aus der benötigten Größe und Bauart des Kreuzstrom-Plattenwärmeaustauschers ergibt. Derart große Vorrichtungen lassen sich nicht auf Motor- oder Segelyachten verwenden. Selbst bei entsprechender Auslegung der Vorrichtung bezogen auf die geringere Raumgröße, bleibt der Kreuzstrom-Plattenwärmeaustauscher großbauend und damit ungeeignet. Besonders nachteilig wirkt sich der nur geringe Wirkungsgrad des Kreuzstrom-Plattenwärmeaustauschers bei geringen Temperaturunterschieden zwischen dem Abluft-Fortluft-Strom und dem Frischluft-Zuluft-Strom aus. Als besonders nachteilig erweist sich, dass die Vorrichtung die Feuchtigkeit der Luft unbeeinflusst lässt. Herrscht im Freien hohe Luftfeuchtigkeit, wird entsprechend feuchte Frischluft über den Frischluft-Zuluft-Strom in das Innere der zu belüftenden Räumlichkeiten geleitet. Dies macht sich bei kleinen und an sich gegen Feuchte empfindliche Räumlichkeiten, wie sie beispielweise auf Motor- oder Segelyachten vorkommen, besonders negativ bemerkbar.

Der Erfindung liegt daher die Aufgabe zu Grunde, ein gattungsmäßiges Luftaufbereitungsgerät zu Regulierung der Wärme und der Luftfeuchtigkeit in geschlossenen Räumen zu entwickeln, das neben angepasster Baugröße, Gewicht und Energieverbrauch die Luftfeuchtigkeit sowohl der Frischluft im Frischluftbetrieb als auch der Abluft im Umluftbetrieb nachhaltig reduziert und bei dem die Luftfeuchtigkeitsregulierung und die Wärmeregulierung aneinander gekoppelt sind.

Diese Aufgabe wird durch die kennzeichnenden Merkmale des Anspruchs 1 gelöst. Zweckdienliche Ausgestaltungen ergeben sich aus den Unteransprüchen 2 bis 6.

Das erfindungsmäßige Luftaufbereitungsgerät zur Regulierung der Wärme und der Luftfeuchtigkeit in geschlossenen Räumen beseitigt die genannten Nachteile des Standes der Technik.
Von Vorteil ist, wenn der Frischluft-Zuluft-Kanal und der Abluft-Fortluft-Kanal im Bereich der Frischluft eingebenden und der Fortluft ausgebenden Einheit kurzgeschlossen werden kann und dabei der Kurzschluss durch eine Frischluftsperre und eine Fortluftsperre realisiert ist, die einerseits die Eingabe von Frischluft und die Ausgabe von Fortluft unterbrechen und andererseits eine Verbindung zwischen dem Frischluft-Zuluft-Kanal und dem Abluft-Fortluft-Kanal freigeben, weil dadurch das Luftaufbereitungsgerät zwischen Frischluft- und Umluftbetrieb umgeschaltet werden kann.
Im Frischluftbetrieb ist besonders vorteilhaft, dass die Frischluft beim Auftreffen auf die Nebenstelle des Verdampfers durch Taupunktunterschreitung Feuchtigkeitsbestandteile abscheidet. Der Effekt verstärkt sich automatisch, je feuchter die Frischluft ist.
Im Umluftbetrieb ist besonders vorteilhaft, dass einerseits der vereiste Verdampfer durch die Abluft aufgetaut wird und andererseits die in der Abluft enthaltene Feuchtigkeit dabei durch Taupunktunterschreitung am Verdampfer als Kondenswasser aus der Abluft abgeschieden wird. Deshalb eignet sich der Umluftbetrieb besonders während der Zeiten, in denen in den Räumen der Motor- oder Segelyachten verstärkt Feuchtigkeit durch Kochen oder Duschen entsteht.

Beide Betriebsarten realisieren eine angenehme Zuluft und tragen somit entscheidend zum verbesserten Raumklima einerseits und zur Werterhaltung der Ausrüstung andererseits bei.
Es ist auch vorteilhaft, wenn dabei der Verdichter mit variabler Drehzahl betrieben werden kann, weil dadurch eine Leistungsanpassung des Luftaufbereitungsgerätes an die Umgebung einerseits und die Bedürfnisse andererseits angepasst werden kann. Dies verhindert ein häufiges Ein- und Ausschalten der Wärmepumpenanlage. Es erhöht sich die Leistungszahl der Wärmepumpenanlage und der Verschleiß wird gleichzeitig minimiert.
Es ist besonders zweckmäßig, wenn sowohl der Frischluft-Zuluft-Kanal als auch der Abluft-Fortluft-Kanal eine Kondenswasserabführöffnung aufweisen, weil die durch Taupunktunterschreitung aus der Luft entfernte Feuchtigkeit so in einfacher Weise abgeführt werden kann.
Eine vorteilhafte Ausgestaltung kann ein Kondensator sein, der teilweise als Wasser-Kältemittel-Wärmetauscher ausgeführt ist und der mit dem Wasserkreislauf über eine separate Pumpe verbunden ist, weil damit in einfacher Weise die zur Verfügung stehende Wärmeenergie optional zum Heizen von Wasser verwendet werden kann.

Die Erfindung soll anhand eines Ausführungsbeispiels näher erläutert werden. Dazu zeigen:
- **Fig. 1**: eine schematische Darstellung des Luftaufbereitungsgerätes mit einem offenen Luftkreislauf im Frischluftbetrieb,
- **Fig. 2**: eine schematische Darstellung des Luftaufbereitungsgerätes mit einem geschlossenen Luftkreislauf im Umluftbetrieb.

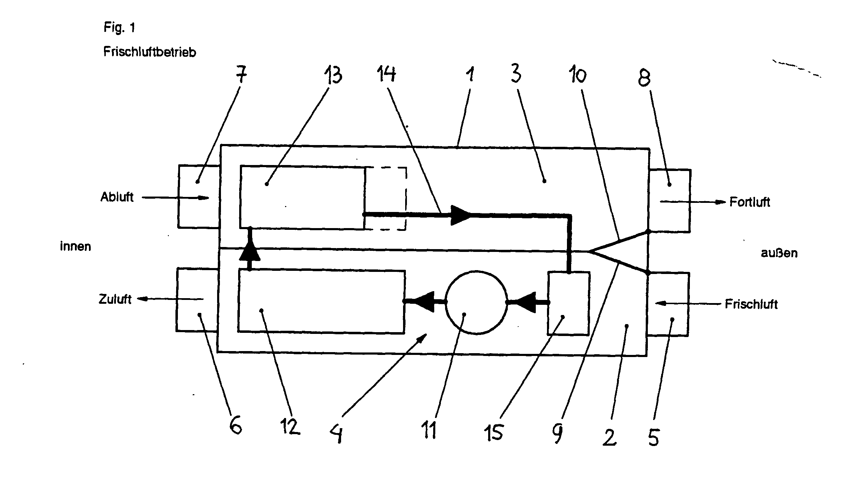

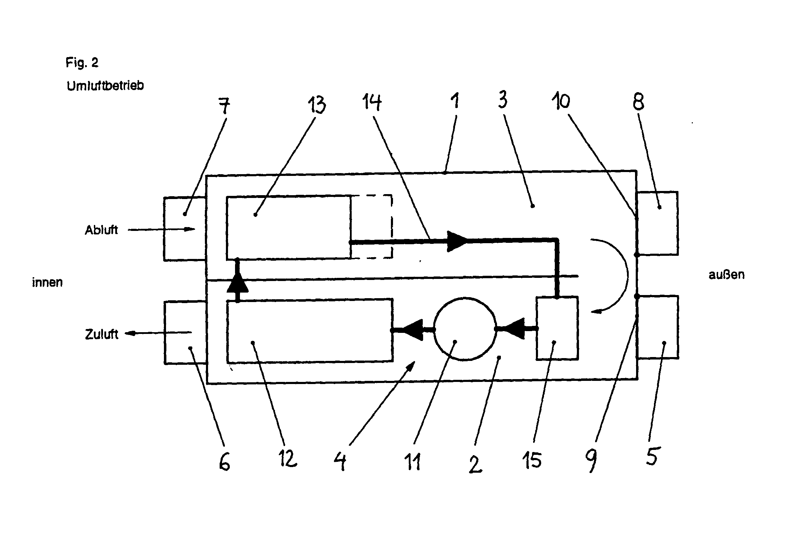

Das erfindungsgemäße Luftaufbereitungsgerät zur Regulierung der Wärme und der Luftfeuchtigkeit in geschlossenen Räumen besitzt einen inneren geschlossenen Kältemittelkreislauf, der mit einem äußeren Luftkreislauf gekoppelt ist. Dabei kann der äußere Luftkreislauf einerseits offen (Frischluftbetrieb) oder andererseits geschlossen (Umluftbetrieb) sein.
Das erfindungsgemäße Luftaufbereitungsgerät zur Regulierung der Wärme und der Luftfeuchtigkeit in geschlossenen Räumen besteht gemäß Fig. 1 und 2 aus einem geteilten Gehäuse 1, das einerseits einen Frischluft-Zuluft-Kanal 2 und andererseits einen parallel angeordneten Abluft-Fortluft-Kanal 3 ausbildet und einer im Gehäuse 1 angeordneten Wärmepumpenanlage 4. Das Gehäuse 1 ist in einer nicht näher dargestellten Belüftungs- oder Heizungsanlage einer Motor- oder Segelyacht angeordnet. Das Gehäuse 1 ist aus schall- und wärmeisolierendem Material ausgeführt, kompakt und damit auf das Platzangebot in Motor- und Segelyachten zugeschnitten.
Der Frischluft-Zuluft-Kanal 2 stellt dabei stromab eine Verbindung von der äußeren Umgebung in die inneren Räumlichkeiten der Motor- und Segelyacht dar und bildet eine Frischluft eingebende Einheit 5 und eine Zuluft ausgebende Einheit 6 aus. Der Abluft-Fortluft-Kanal 3 stellt gleichfalls stromab die Verbindung, jedoch in entgegengesetzter Richtung, von den inneren Räumlichkeiten der Motor- und Segelyacht in die äußere Umgebung dar und bildet eine Abluft eingebende Einheit 7 und eine Fortluft ausgebende Einheit 8 aus. Sowohl der Frischluft-Zuluft-Kanal 2 als auch der Abluft-Fortluft-Kanal 3 weisen eine nicht dargestellte Austrittsöffnung für Kondenswasser auf. Die Austrittsöffnungen für Kondenswasser führen zweckmäßigerweise in die Bilge der Motor- oder Segelyacht, in die das Kondenswasser abfließen kann. Es ist gleichfalls denkbar, das Kondenswasser mittels einer Pumpe entweder in die Bilge oder ins Freie zu pumpen.
Sowohl der Frischluft-Zuluft-Kanal 2 als auch der Abluft-Fortluft-Kanal 3 weisen jeweils mindestens einen nicht dargestellten handelsüblichen Ventilator auf. Dabei sind die Ventilatoren so ausgelegt, dass sie über das elektrische Bordnetz betrieben werden können.
Die Frischluft eingebende Einheit 5 ist mit einer Frischluftsperre 9 und die Fortluft ausgebende Einheit 8 mit einer Fortluftsperre 10 verschließbar ausgeführt. In der geschlossenen Stellung sowohl der Frischluftsperre 9 als auch der Fortluftsperre 10 ist gleichzeitig eine Verbindung zwischen dem Frischluft-Zuluft-Kanal 2 und dem Abluft-Fortluft-Kanal 3 freigegeben.
Die Wärmepumpenanlagenanlage 4 besteht bekanntermaßen aus einem Verdichter 11, einem Kondensator 12 und einem Verdampfer 13. Dabei ist die Wärmepumpenanlage 4 in einem geschlossenen Kältemittelkreislauf mittels eines Druckleitungsnetzes 14 verbunden. Im Druckleitungsnetz 14 zirkuliert Kältemittel. Die Wärmepumpenanlage 4 weist im Kältemittelkreislauf andere, nicht näher dargestellte Bauteile auf. Die Dimensionierung der Wärmepumpenanlage 4 mit den thermisch wirksamen Oberflächen des Kondensators 12 und des Verdampfers 13 richtet sich dabei nach der erforderlichen Menge an aufzubereitender Luft entsprechend der Größe der Motor- oder Segelyacht bei gleichzeitig minimalem Energieaufwand aus. Die Leistungsaufnahme des Luftaufbereitungsgeräts aus dem elektrischen Bordnetz ist so ausgelegt, dass die notwendige Energie problemlos über für Boote verfügbare Solar- oder Windkraftanlagen bereitgestellt werden kann. Dabei wird der Verdichter 11 über das elektrische Bordnetz betrieben. Die Drehzahl des Verdichters 11 ist über eine nicht dargestellte Steuereinheit veränderbar. Der Verdampfer 13 ist zweigeteilt ausgeführt und weist eine Nebenstelle 15 auf. Die zum Wärmeaustausch wirksame Oberfläche der Nebenstelle des Verdampfers 15 beträgt dabei etwa 5..30% der wirksamen Oberfläche des Verdampfers 13. Im Frischluft-Zuluft-Kanal 2 sind stromab die Nebenstelle des Verdampfers 15, der Verdichter 11 und der Kondensator 12 angeordnet. Im Abluft-Fortluft-Kanal 3 ist stromab der Verdampfer 13 angeordnet.
Neben der Auslegung des Kondensators 12 zur Wärmeübertragung Luft-Kältemittel kann ein Teil des Kondensators 12 als Wasser-Kältemittel-Wärmetauscher ausgeführt sein, so dass bei Zuschaltung eines Wasserkreislaufs über eine separaten Pumpe Wasser aufgeheizt werden könnte.

Die Handhabung des Luftaufbereitungsgerätes zur Regulierung der Wärme und der Luftfeuchtigkeit in geschlossenen Räumen soll nun anhand zweier Funktionsbeschreibungen erläutert werden. In der Fig. 1 ist der Frischluftbetrieb und in der Fig. 2 ist der Umluftbetrieb dargestellt. Sowohl im Frischluft- als auch im Umluftbetrieb arbeitet die Wärmepumpenanlage 4 in bekannter Weise. Dabei ist der Verdichter 11 auf Grund der Verlustwärme warm, der Kondensator 12 weist eine hohe und der Verdampfer 13 sowie die Nebenstelle des Verdampfers 15 eine niedrige Temperatur auf. Dabei sind die Temperaturen des Kondensator 12, des Verdampfers 13 und der Nebenstelle des Verdampfers 15 in Grenzen über die Drehzahl des Verdichters 11 einstellbar.
In Fig. 1 ist das Luftaufbereitungsgerät zur Regulierung der Wärme und der Luftfeuchtigkeit in geschlossenen Räumen im Frischluftbetrieb dargestellt, bei dem die Frischluftsperre 9 und die Fortluftsperre 10 offen und die Ventilatoren eingeschaltet sind. Dadurch wird einerseits Frischluft in den Frischluft-Zuluft-Kanal 2 und andererseits Abluft in den Abluft-Fortluft-Kanal 3 gefördert.
Dabei trifft die Frischluft zuerst auf die Nebenstelle des Verdampfers 15. Betriebsbedingt ist die Nebenstelle des Verdampfers 15 kälter, so dass durch Unterschreitung des Taupunktes Kondenswasser aus der Frischluft ausfällt. Die dadurch trockenere Frischluft heizt sich beim Überstreichen des warmen Verdichters 11 und besonders der thermisch wirksamen Oberfläche des sehr viel wärmeren Kondensators 12 auf. Dabei wird die im Kältemittel enthaltene Wärme auf die Frischluft übertragen und gelangt als entfeuchtete und erwärmte Zuluft in die inneren Räumlichkeiten der Motor- und Segelyacht. Gleichzeitig wird Abluft aus den inneren Räumlichkeiten gefördert, die im Abluft-Fortluft-Kanal 3 den sehr viel kälteren Verdampfer 13 überstreicht und dabei abkühlt. Die in der Abluft enthaltene Wärme wird über die thermisch wirksame Oberfläche des Verdampfers 13 an das Kältemittel übertragen und bleibt somit nutzbar. Die abgekühlte Abluft wird als Fortluft aus der Belüftungs- oder Heizungsanlage in die äußere Umgebung abgeführt. Das am Verdampfer 13 und an der Nebenstelle des Verdampfers 15 entstandene Kondenswasser wird in die Bilge über die jeweilige Öffnung abgeführt.
In Fig. 2 ist das Luftaufbereitungsgerät zur Regulierung der Wärme und der Luftfeuchtigkeit in geschlossenen Räumen im Umluftbetrieb dargestellt, bei dem die Frischluftsperre 9 und die Fortluftsperre 10 geschlossen und die Ventilatoren eingeschaltet sind. Dadurch gelangt Abluft zuerst in den Abluft-Fortluft-Kanal 3 und danach in den verbundenen Frischluft-Zuluft-Kanal 2, so dass ein geschlossener Kreislauf entsteht. Die warme und feuchte Abluft aus den inneren Räumlichkeiten der Motor- oder Segelyacht trifft im Abluft-Fortluft-Kanal 3 auf die thermisch wirksame Oberfläche des sehr viel kälteren Verdampfers 13. Die in der Abluft enthaltene Feuchtigkeit schlägt sich durch Unterschreitung des Taupunktes als Kondenswasser am Verdampfer 13 nieder und wird über entsprechende Öffnung in die Bilge abgeführt. Die in der Abluft enthaltene Wärme wird über die thermisch wirksame Oberfläche des Verdampfers 13 an das Kältemittel übertragen und bleibt somit nutzbar. Die Abluft überstreicht danach die Nebenstelle des Verdampfers 15. Gleichfalls werden noch Feuchtigkeit als Kondenswasser abgeschieden und Wärme auf das Kältemittel übertragen. Die entfeuchtete und abgekühlte Abluft überstreicht zum einen den warmen Verdichter 11 und zum anderen die thermisch wirksame Oberfläche des sehr viel wärmeren Kondensators 12. Dabei nimmt die Abluft die Wärme auf und wird als entfeuchtete und erwärmte Zuluft in die inneren Räumlichkeiten der Motor- oder Segelyacht abgeführt.
Eine Umschaltung vom normalen Frischluftbetrieb auf temporären Umluftbetrieb erfolgt entweder automatisch, sobald der Verdampfer 13 und die Nebenstelle des Verdampfer 15 auf Grund einer geringen Außentemperatur der Frischluft vereist oder von Hand, wenn die Luftfeuchtigkeit aus den inneren Räumlichkeiten der Motor- oder Segelyacht besonders effektiv entfernt werden soll.

### Liste der Bezugszeichen

- 1: Gehäuse
- 2: Frischluft-Zuluft-Kanal
- 3: Abluft-Fortluft-Kanal
- 4: Wärmepumpenanlage
- 5: Frischluft eingebende Einheit
- 6: Zuluft ausgebende Einheit
- 7: Abluft eingebende Einheit
- 8: Fortluft ausgebende Einheit
- 9: Frischluftsperre
- 10: Fortluftsperre
- 11: Verdichter
- 12: Kondensator
- 13: Verdampfer
- 14: Druckleitungsnetz
- 15: Nebenstelle des Verdampfers

## Patentansprüche

1. Luftaüfbereitungsgerät zur Regulierung der Wärme und der Luftfeuchtigkeit in geschlossenen Räumen, die einerseits einen geschlossenen Kältemittelkreislauf und andererseits einen offenen oder geschlossenen Luftkreislauf besitzt, wobei der Kältemittelkreislauf und der Luftkreislauf miteinander gekoppelt sind und der Kältemittelkreislauf dabei in Form einer Wärmepumpenanlage 4 ausgeführt ist, die aus einem Verdichter (11), einem Kondensator (12) und einem Verdampfer (13) besteht, wobei der Verdichter (11) und der Kondensator (12) in einem Frischluft-Zuluft-Kanal (2) des Luftkreislaufes und der Verdampfer (13) in einem Abluft-Fortluft-Kanal (3) des Luftkreislaufes angeordnet ist,
**dadurch gekennzeichnet, dass** der Verdampfer (13) mindestens zweigeteilt ausgeführt ist und mindestens eine Nebenstelle des Verdampfers (15) dabei im Frischluft-Zuluft-Kanal (3) stromab vor dem Kondensator (12) angeordnet ist und der Verdichter (11) zwischen der Nebenstelle des Verdampfers (15) und dem Kondensator (12) angeordnet ist.

2. Luftaufbereitungsgerät nach Anspruch 1,
**dadurch gekennzeichnet, dass** der Frischluft-Zuluft-Kanal (2) und der Abluft-Fortluft-Kanal (3) im Bereich einer Frischluft eingebenden Einheit (5) und einer Fortluft ausgebenden Einheit (8) kurzschließbar ausgeführt ist.

3. Luftaufbereitungsgerät nach Anspruch 2,
**dadurch gekennzeichnet, dass** der Kurzschluss zwischen dem Frischluft-Zuluft-Kanal (2) und dem Abluft-Fortluft-Kanal (3) durch eine Frischluftsperre (9) und eine Fortluftsperre (10) realisiert ist, die einerseits die Eingabe von Frischluft und die Ausgabe von Fortluft unterbrechen und andererseits eine Verbindung zwischen dem Frischluft-Zuluft-Kanal (2) und dem Abluft-Fortluft-Kanal (3) freigeben.

4. Luftaufbereitungsgerät nach Anspruch 1,
**dadurch gekennzeichnet, dass** der Verdichter (11) mit variabler Drehzahl betreibbar ausgeführt ist.

5. Luftaufbereitungsgerät nach Anspruch 1,
**dadurch gekennzeichnet, dass** der Frischluft-Zuluft-Kanal (2) und der Abluft-Fortluft-Kanal (3) jeweils eine Kondenswasserabführöffnung aufweisen.

6. Luftaufbereitungsgerät nach Anspruch 1,
**dadurch gekennzeichnet, dass** der Kondensator (12) teilweise als Wasser-Kältemittel-Wärmetauscher ausgeführt und mit dem Wasserkreislauf über eine separate Pumpe verbindbar ist.

## Claims

1. Air-conditioning device for the heat and humidity control of closed rooms featuring a closed coolant circuit on one hand and an open or closed air circuit on the other, wherein the coolant and air circuit are linked and the coolant circuit is designed in the form of a heat pump (4) comprising a compressor (11), a condenser (12) and an evaporator (13), whereby the compressor (11) and the condenser (12) are arranged in an inward fresh air duct (2) and the evaporator (13) in an outward exhaust air duct (3) of the air circuit, **characterized by** the evaporator (13) being implemented at least in two parts and at least one evaporator's extension (15) being downstream in front of the condenser (12) in the inward fresh air duct (3) and the compressor (11) being between the evaporator's extension (15) and the condenser (12).

2. Air conditioner according to claim 1,
**characterized by** the inward fresh air duct (2) and the outward exhaust air duct (3) being implemented to be short circuitable in the area of a fresh air input unit (5) and an exhaust air output unit (8).

3. Air conditioner according to claim 2
**characterized by** the short circuit between the inward fresh air duct (2) and the outward exhaust air duct (3) being realized by a fresh air blocker (9) and an exhaust air blocker (10), which interrupt the input of fresh air and the output of exhaust air on one hand and open a link between the inward fresh air duct (2) and the outward exhaust air duct (3) on the other.

4. Air conditioner according to claim 1,
**characterized by** the compressor (11) being executed with a variable speed of rotation.

5. Air conditioner according to claim 1,
**characterized by** the inward fresh air duct (2) and the outward exhaust air duct (3) each having an opening for condensation discharge.

6. Air conditioner according to claim 1,
**characterized by** the condenser (12) partly being executed as a water to coolant heat exchanger and being connectable to the water circuit via a separate pump.

## Revendications

1. Dispositif de climatisation d'air pour la commande du chauffage et de l'humidification dans une enceinte fermée,qui comporte d'une part un circuit fermé de fluide frigorigène, et d'autre part un circuit d'air ouvert ou fermé, dans lequel le circuit de fluide frigorigène et le circuit d'air sont couplés ensemble, et le circuit de fluide frigorigène est alors réalisé sous la forme d'une installation de pompe à chaleur 4, qui est constituée par un compresseur (11), un condenseur (12) et un évaporateur (13), le compresseur (11) et le condenseur (12) étant logés dans une conduite d'alimentation en air frais (2) du circuit d'air, et le compresseur (13) dans une conduite d'air évacué rejeté (3) du circuit d'air,
**caractérisé en ce que** l'évaporateur (13) est réalisé en au moins deux parties, et qu'au moins un poste secondaire de l'évaporateur (15) est installé dans la conduite d'alimentation en air frais (3) en aval devant le condenseur (12), et que le compresseur (11) est installé entre le poste secondaire de l'évaporateur (15) et le condenseur (12).

2. Dispositif de climatisation d'air selon la revendication 1,
**caractérisé en ce que** la conduite d'air évacué rejeté (2) et la conduite d'alimentation en air frais (3) sont réalisées de manière à pouvoir être court-circuités dans la zone d'un organe fournissant de l'air frais (5) et d'un organe évacuant l'air rejeté (8).

3. Dispositif de climatisation d'air selon la revendication 1,
**caractérisé en ce que** le court-circuit entre la conduite d'air évacué rejeté (2) et la conduite d'alimentation en air frais (3) est réalisé par un blocage d'air frais (9) et un blocage de l'air rejeté (10), qui interrompent d'une part l'alimentation en air frais et l'évacuation d'air rejeté, et qui établissent d'autre part une liaison entre la conduite d'air évacué rejeté (2) et la conduite d'alimentation en air frais (3).

4. Dispositif de climatisation d'air selon la revendication 1,
**caractérisé en ce que** le compresseur (11) est réalisé de manière à pouvoir fonctionner à une vitesse de rotation variable.

5. Dispositif de climatisation d'air selon la revendication 1,
**caractérisé en ce que** la conduite d'air évacué rejeté (2) et la conduite d'alimentation en air frais (3) comportent chacune une ouverture d'évacuation d'eau de condensation.

6. Dispositif de climatisation d'air selon la revendication 1,
**caractérisé en ce que** le condenseur (12) est partiellement réalisé en tant qu'échangeur de chaleur à eau-fluide frigorigène, et qu'il peut être relié au circuit d'eau par une pompe séparée.
